Europäisches Patentamt

European Patent Office

Office européen des brevets

(19)

(11) Veröffentlichungsnummer: **0 360 901**
**A1**

(12) # EUROPÄISCHE PATENTANMELDUNG

(21) Anmeldenummer: 88116048.5

(22) Anmeldetag: 29.09.88

(51) Int. Cl.⁵: **G01N 1/22 , G01N 30/00**

(43) Veröffentlichungstag der Anmeldung:
04.04.90 Patentblatt 90/14

(84) Benannte Vertragsstaaten:
**CH DE FR GB LI**

(71) Anmelder: **LEYBOLD AKTIENGESELLSCHAFT**
**Bonner Strasse 498**
**D-5000 Köln 51(DE)**

(72) Erfinder: **Voss, Günter, Dr.**
**Werschberg 60**
**D-5203 Much(DE)**

(74) Vertreter: **Leineweber, Jürgen, Dipl.-Phys.**
**Nagelschmiedshütte 8**
**D-5000 Köln 40(DE)**

(54) **Verfahren und Vorrichtung zur Probennahme und Analyse von Kohlenwasserstoffen.**

(57) Die Erfindung betrifft ein Verfahren zur Probennahme und Analyse fluider Kohlenwasserstoffe, bei dem die Probe durch Sorption gesammelt, zu einem Analysengerät transportiert und analysiert wird, sowie eine für die Durchführung dieses Verfahrens geeignete Einrichtung; um empfindliche Analysen mit ausreichend hohen Probenmengen durchführen zu können, wird vorgeschlagen, daß die Proben durch Absorption in einem festen Sorbens (1) mit relativ hoher Löslichkeit und mit einem relativ kleinen Diffusionsquotienten für die Proben gesammelt werden.

FIG.1

EP 0 360 901 A1

## Verfahren und Vorrichtung zur Probennahme und Analyse von Kohlenwasserstoffen

Die Erfindung bezieht sich auf ein Verfahren zur Probennahme und Analyse fluider Kohlenwasserstoffe, bei dem die Probe durch Sorption gesammelt, zu einem Analysengerät transportiert und analysiert wird. Außerdem bezieht sich die Erfindung auf für die Durchführung dieses Verfahrens geeignete Mittel.

Es ist bekannt, daß insbesondere flüchtige Kohlenwasserstoffe häufig die Ursache gravierender Umweltbelastungen sind; die spezielle Wirkung bestimmter Kohlenwasserstoffe auf die Umwelt ist jedoch vielfach noch unerforscht. Dieses liegt nicht zuletzt daran, daß geeignete Probennahme- und Analyseverfahren für fluide Kohlenwasserstoffe noch nicht zur Verfügung stehen.

Aus "Staub, Reinhaltung der Luft", Bd. 47 (1987), Nr. 1 2, Seiten 13ff ist ein Verfahren der eingangs erwähnten Art bekannt. Dabei erfolgt das Sammeln der gasförmigen Proben an der Oberfläche von pulver- bzw. granulatförmig vorliegender Adsorptionsmitteln, wie Tenax TA, Carbosieve S-II und Molekularsieb 5A. Eine Probennahme dieser Art erlaubt es nicht unmittelbar, hohe Probengaskonzentrationen für den Analysenschritt zur Verfügung zu stellen. An die Adsorption der Proben an der Oberfläche der erwähnten Adsorptionsmittel schließt sich deshalb ein Aufkonzentrieren der gesammelten Kohlenwasserstoffe an. Dazu werden die Kohlenwasserstoffe thermisch desorbiert und in einer gekühlten Kapillare fokussiert. Danach erfolgt eine erneute thermische Desorption und die Zufuhr der aufkonzentrierten Kohlenwasserstoffe zum Analysengerät, einem Kapillargaschromatographen.

Der vorliegenden Erfindung liegt die Aufgabe zugrunde, bei einem Verfahren der eingangs erwähnten Art die Probennahme zu vereinfachen und derart zu verbessern, daß dem sich anschließenden Analysenschritt unmittelbar ausreichend hohe Probenkonzentrationen zur Verfügung stehen, Aufkonzentrierungsmaßnahmen also nicht mehr erforderlich sind.

Erfindungsgemäß wird diese Aufgabe dadurch gelöst, daß die Proben durch Absorption in einem festen Sorbens mit relativ hoher Löslichkeit und mit einem relativ kleinen Diffusionsquotienten für die Proben gesammelt werden. Infolge der hohen Löslichkeit des Sorbens besteht die Möglichkeit, ausreichend große Probenmengen für die Identifizierung durch massenspektrometrische oder spektroskopische Analyseverfahren zu sammeln. Aufgrund des kleinen Diffusionskoeffizienten ist sichergestellt, daß das Sorbens eine Speicherfunktion erfüllen kann, d. h. gleichzeitig als "Probennahmegefäß" und als Transportmittel zur Analyseneinrichtung dienen kann. Gewöhnlich sind die zu untersuchenden Kohlenwasserstoffe gasförmig. Die Erfindung ist jedoch auch bei flüssigen Proben einsetzbar.

Als Sorbens sind Stoffe geeignet, deren Löslichkeit L [cm³/cm³ bar] so hoch ist, daß bei vertretbaren Sorbens-Volumina die gelöste Probenmenge für die Identifizierung ausreicht. Der Diffusionskoeffizient D [cm²/s] muß so klein sein, daß die relativ große, nach der Probennahme im Sorbens gelöste Probenmenge auch nach dem Transport vom Expositionsort zum Analysengerät noch für die Identifizierung ausreicht. Besonders vorteilhaft ist dabei, wenn der Diffusionskoeffizient des Sorbenten äußerst klein ist.

Dadurch werden Langzeitbeobachtungen möglich, ohne daß eine vollständige Sättigung der im Sorbenten gelösten Kohlenwasserstoffe erreicht wird. Unter diesen Voraussetzungen können Aussagen über die Historie der Expositionszeit gemacht werden.

Als für die Probennahme nach der Erfindung besonders geeignetes Sorbens haben sich Polymere, wie Polytetrafluoräthylen-CO-Hexafluorpropylen (FEP) erwiesen. Polymere dieser Art sind als Folie in verschiedenen Stärken erhältlich. FEP hat für Kohlenwasserstoffe sehr hohe Löslichkeiten (bis zu Prozenten der Folienmasse); die Diffusionskoeffizienten sind äußerst klein. Die Kohlenwasserstoffkomponenten können selbst in Folien mit einer Dicke von 0,1 mm derart stark angereichert und gespeichert werden, daß die gespeicherte Menge für die Massenanalyse ausreicht. FEP hat außerdem den Vorteil, daß es chemisch inert ist und mit gleichmäßiger Struktur (für reproduzierbare Messungen) herstellbar ist. Die Verwendung von Folien mit einer Dicke von 0,1 bis 1 mm hat sich als vorteilhaft erwiesen.

Beispiele für D und L in FEP sind:
Für $C_2H_6$:
$D = 4,7 \times 10^{-9}$ cm²·s⁻¹ .
$L = 0,71$ cm³·cm⁻³·bar⁻¹
Für $C_3H_8$:
$D = 7,7 \times 10^{-10}$ cm²·s⁻¹
$L = 1,4$ cm³·cm⁻³·bar⁻¹

Zur Identifizierung der im Sorbens gelösten Kohlenwasserstoffe sind im Prinzip alle Methoden der Gasanalyse geeignet, da die gespeicherten Gasmengen der erfindungsgemäß genommenen Proben für einen Nachweis ausreichen. Massenspektrometrische Verfahren (Massenspektrometer, Gaschromatographen usw.) setzen in der Regel voraus, daß das gesammelte Gas vor oder während der Analyse thermisch ausgetrieben wird. Die Verwendung von FEP als Sorbens hat darüber hinaus noch den Vorteil, daß auf Grund des Transmissionsvermögens von FEP photometrische Verfahren zur Identifizierung der im FEP gelösten Kohlenwasserstoffe anwendbar sind (Atomabsorptionsspektrometer, Infrarotgeräte usw.).

Weitere Vorteile und Einzelheiten der Erfindung sollen anhand von Ausführungsbeispielen und Figuren erläutert werden.

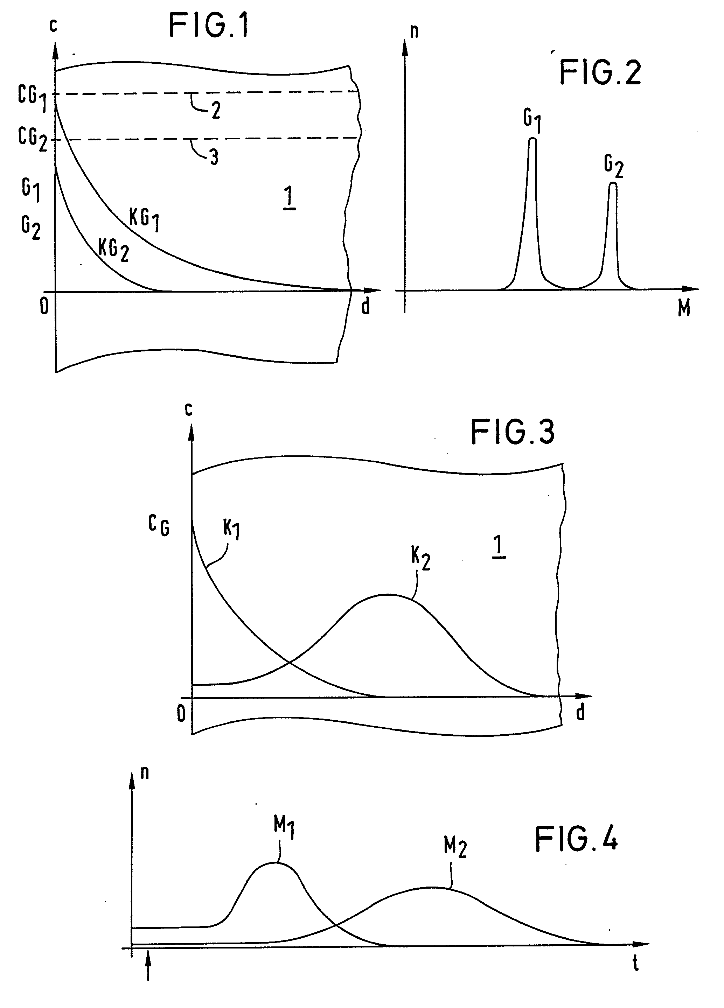

Figur 1 zeigt stark vergrößert den Rand eines Sorbens 1, z. B. einer Polymer-Folie, die zum Zwecke der Probennahme einem zu untersuchenden Milieu (z. B. Flußwasser, Mülldeponie, Lebensmittel, Luft oder dergleichen) exponiert ist. Die Umgebung enthält beispielsweise zwei Kohlenwasserstoffgase $G_1$ und $G_2$ mit den Konzentrationen $CG_1$ und $CG_2$. Die umgebenden Gasbestandteile gelangen durch Lösungsdiffusion in das Polymer, wobei die Kohlenwasserstoffe - insbesondere die halogenierten Kohlenwasserstoffe - bevorzugt werden. Nach einer bestimmten Zeit ist je nach Löslichkeit und Diffusionskoeffizienten eine bestimmte Menge der Kohlenwasserstoffgase im Sorbens 1 gelöst. Der Konzentrationsverlauf ist über die Dicke d der Folie 1 dargestellt (Kurven $KG_1$ und $KG_2$). Die Oberfläche bzw. der Rand des Sorbens 1 ist identisch mit der y-Achse des eingezeichneten Koordinatensystems.

Nach der Expositionszeit wird das Sorbens 1 vom Expositionsort zum Analysenort transportiert. Die im Sorbens 1 gelösten Gase $G_1$ und $G_2$ können z. B. im Vakuum thermisch ausgetrieben werden. Gleichzeitig wird eine Massenanalyse durchgeführt. Figur 2 zeigt das zugehörige Massenspektrum mit den Linien der Gase $G_1$ und $G_2$.

Infolge der hohen Löslichkeit von Polymer-Folien für Kohlenwasserstoffgase kann eine für die Massenanalyse ausreichend hohe Gasmenge gesammelt und wegen des niedrigen Diffusionskoeffizienten über längere Zeit gespeichert werden. Die Speicherzeit kann außerdem durch Kühlung des Sorbens, z. B. während der Zeit des Transportes vom Expositionsort zum Analysenort, nahezu beliebig verlängert werden.

Die Expositionszeit kann so lange ausgedehnt werden, bis eine Sättigung der im Sorbens 1 gelösten Gase eintritt. Durch gestrichelte Linien 2 und 3 in Figur 1 ist dieser Zustand dargestellt. Dadurch ergäbe sich zwar der Vorteil, daß die im Sorbens 1 gelösten Gasmengen sehr groß sind; eine Aussage über die Historie der Expositionszeit, wie sie anhand der weiteren Figuren erläutert werden soll, wäre dann jedoch nicht mehr möglich.

Figur 3 zeigt wieder stark vergrößert den Rand eines Sorbens 1. $K_1$ ist beispielsweise ein Konzentrationsverlauf, der entsteht, wenn während der gesamten Expositionszeit das Kohlenwasserstoffgas G mit der Konzentration $C_G$ am Expositionsort vorhanden war. Die Kurve $K_1$ entspricht den Konzentrationsverlaufs-Kurven $KG_1$ und $G_2$ nach Figur 1. Eine quantitative Aussage über die Konzentration $C_G$ ist möglich, wenn das der Auswertung dienende Massenspektrometer auf die Masse des Gases G eingestellt wird und diese Linie über die gesamte Zeit des Ausheizens registriert wird. In Figur 4 ist beispielsweise das Ergebnis dargestellt (Kurve $M_1$). Mit einem Pfeil ist der Zeitpunkt des Beginns des Ausheizens gekennzeichnet. Erst nach wenigen Sekunden, wenn das Sorbens bzw. die Folie 1 eine ausreichend hohe Temperatur angenommen hat (z. B. 200° Celsius), beginnt die beschleunigte thermische Desorption. Der Ausheizvorgang wird solange aufrechterhalten, bis das Gas G vollständig desorbiert ist. Das Integral über die Kurve $M_1$ beschreibt die insgesamt aufgenommene Gasmenge, die - in Kenntnis von D, d, L und der Expositionszeit - ein Maß für die Konzentration des Gases G am Expositionsort ist.

Die Kurve $K_2$ in Figur 3 zeigt den Konzentrationsverlauf für den Fall, daß das Gas G nur zeitweise im Bereich des Expositionsortes vorhanden war. Die Konzentration dieses Gases G ist während der Expositionszeit auf Null zurückgegangen. Dadurch ergibt sich ein Konzentrationsverlauf $K_2$ mit einem ins Innere des Sorbens bzw. der Folie 1 verschobenen Maximum. Infolge des relativ kleinen Diffusionskoeffizienten werden deshalb die Kohlenwasserstoff moleküle während der thermischen Desorption später aus dem Sorbens 1 austreten, als wenn sie sich im Randbereich befinden würden. In Figur 4 ist beispielsweise eine dem Konzentrationsverlauf $K_2$ entsprechende Auswertekurve $M_2$ dargestellt. Gegenüber der Kurve $M_1$ ist die Kurve $M_2$ zu längeren Zeiten hin verschoben. Aus dem speziellen Zeitverlauf und wieder in Kenntnis der Werte für D, d, L und für die Expositionszeit können die Zeitpunkte für Beginn und Ende des Vorhandenseins des Gases G rekonstruiert werden.

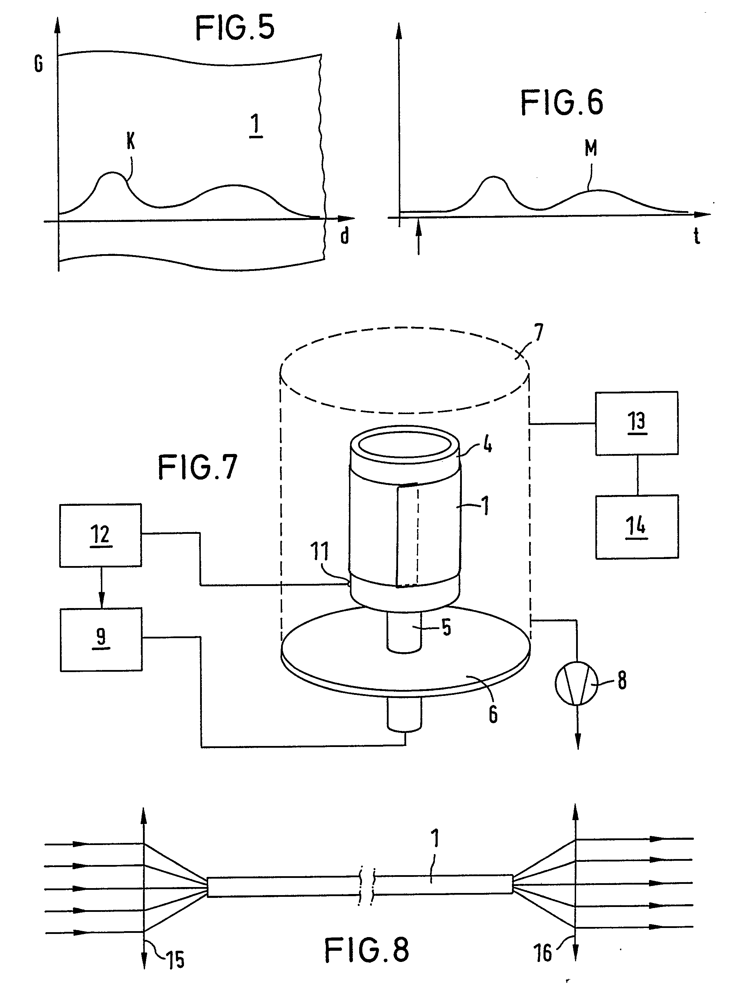

Die Figuren 5 und 6 zeigen ergänzend den Fall, daß ein Gas G in zwei verschiedenen Zeitabschnitten während der Expositionszeit der Folie 1 vorhanden war. Figur 5 zeigt beispielsweise einen Konzentrationsverlauf für diesen Fall. Figur 6 zeigt den Kurvenverlauf, der durch thermisches Ausheizen und gleichzeitig durchgeführte Massenanalyse gewonnen wird. Die Zeiten, in denen das Gas G am Expositionsort vorhanden waren, können aus dem Kurvenverlauf M rekonstruiert werden.

Figur 7 zeigt eine Vorrichtung zur Durchführung der Massenanalyse bei gleichzeitigem Ausheizen der Folie 1. Die Folie 1 ist auf einen zylindrischen Hohlkörper 4 aufgewickelt, der aus relativ grobporigem Sintermaterial besteht. Mit einer nicht dargestellten Klammer wird die Folie 1 in der eingezeichneten Lage festgehalten. Der Sinterhohlkörper ist mit einem heizbaren Sockel 5 ausgerüstet, der seinerseits auf dem Flansch 6 befestigt ist. Der Flansch 6 dient dem Verschluß eines lediglich gestrichelt dargestellten Rezipienten 7, der mit Hilfe der Vakuumpumpe 8 evakuierbar ist.

Die die Heizung versorgende Stromquelle ist als Block 9 dargestellt. Um ein Temperaturprogramm fahren zu können, ist am Sinterkörper 4 ein Temperatursensor 11 vorgesehen, der seine Signale dem Regler 12 zuführt. Mit Hilfe dieses Reglers 12 ist der gewünschte Temperaturverlauf einstellbar.

Während des Ausheizens ist das Massenspektrometer 13 an den Rezipienten 7 angeschlossen. Mit 14 sind Einrichtungen zur Auswertung der vom Massenspektrometer 13 gelieferten Signale bezeichnet.

FEP besitzt zwischen 200 nm und 8 $\mu$m ein nahezu konstantes Transmissionsvermögen von über 90%. Dadurch ist es möglich, auch spektroskopische Verfahren anzuwenden. Innerhalb des erwähnten Fensters können die Schwingungen der gesammelten Kohlenwasserstoffe gefunden werden. Die Differenz des Transmissionsvermögens bis 100% ist auf Reflektionsverluste (Brechungsindex 1,35) zurückzuführen, so daß die Möglichkeit besteht, auch sehr lange Proben zu messen. Die zu untersuchenden Proben können, wie Figur 8 zeigt, der Länge nach, d. h. wie ein Lichtleiter, in den Strahlengang gebracht werden. Vor und hinter der Folie 1, deren Dicke 0,1 bis 1 mm und deren Länge ca. 200 mm betragen kann, müssen geeignete Ein- und Auskoppelsysteme angeordnet werden. Für den spektroskopischen Nachweis selbst stehen alle bekannten Verfahren zur Verfügung.

Mit diesen spektroskopischen Verfahren sind ebenfalls quantitative Messungen und Aussagen über die Historie der Expositionszeit möglich. Dieses kann dadurch geschehen, daß während des Ausheizens mehrfach spektrometrische Analysen durchgeführt werden. Aus dem Verschwinden von Absorptionsbanden können quantitative Aussagen gemacht und das zeitliche Vorhandensein der gesammelten Gase am Expositionsort rekonstruiert werden. Messungen können dank der Anreicherungsmechanismen mit hoher Empfindlichkeit durchgeführt werden. Die Probennahme durch Lösungsdiffusion ist einfach und bequem im Labor auswertbar.

Das erfindungsgemäße Verfahren erlaubt die integrale Bestimmung von Schadstoffkonzentrationen in der Luft sowie die Überwachung von Gewässern. Die Kontrolle der Gesamtexposition von Personen, die in gefährdeten Bereichen arbeiten ist möglich. Der Nachweis kleinster Mengen von Fluor- Chlor- Kohlenwasserstoffen oder Perchlorotylen (z.B. in Lebensmitteln) ist möglich. Die Messungen können dank der Anreicherungsmechanismen mit hoher Empfindlichkeit durchgeführt werden. Die Probennahme durch Lösungsdiffusion ist einfach und bequem im Labor auswertbar.

## Ansprüche

1. Verfahren zur Probennahme und Analyse fluider Kohlenwasserstoffe, bei dem die Probe durch Sorption gesammelt, zu einem Analysengerät transportiert und analysiert wird, dadurch gekennzeichnet, daß die Proben durch Absorption in einem festen Sorbens (1) mit relativ hoher Löslichkeit und mit einem relativ kleinen Diffusionsquotienten für die Proben gesammelt werden.

2. Verfahren nach Anspruch 1, dadurch gekennzeichnet, daß die Analyse durchgeführt wird, bevor die Proben im Sorbens (1) ihre Lösungssättigung erreicht haben.

3. Verfahren nach Anspruch 1 oder 2, dadurch gekennzeichnet, daß die im Sorbens (1) gelösten Kohlenwasserstoffe thermisch desorbiert werden und daß die Analyse während des Ausheizens durchgeführt wird.

4. Verfahren nach einem der Ansprüche 1 bis 3, dadurch gekennzeichnet, daß zur Analyse der Proben massenspektrometrische Verfahren angewendet werden und daß das Sorbens (1) während der Analyse im Vakuum beheizt wird.

5. Verfahren nach einem der vorhergehenden Ansprüche, dadurch gekennzeichnet, daß als Sorbens (1) eine Polymer-Folie verwendet wird.

6. Verfahren nach Anspruch 5, dadurch gekennzeichnet, daß als Polymer-Folie eine Tetrafluoräthylen-CO-Hexafluorpropylen(FEP)-Folie verwendet wird.

7. Verfahren nach Anspruch 5 oder 6, dadurch gekennzeichnet, daß zur Analyse der Proben spektroskopische Verfahren eingesetzt werden.

8. Verfahren nach Anspruch 7, dadurch gekennzeichnet, daß die Folie mit den zu untersuchenden Proben der Länge nach in den Strahlengang gebracht wird.

9. Verfahren nach einem der vorhergehenden Ansprüche, dadurch gekennzeichnet, daß das Sorbens (1) während des Transportes vom Expositionsort zum Analysenort gekühlt wird.

10. Einrichtung zur Durchführung des Verfahrens nach einem der vorhergehenden Ansprüche, dadurch gekennzeichnet, daß das Sorbens (1) ein Material mit relativ hoher Löslichkeit und mit relativ kleinem Diffusionsquotienten ist.

11. Einrichtung nach Anspruch 10, dadurch gekennzeichnet, daß das Sorbens (1) eine Polymer-Folie ist.

12. Einrichtung nach Anspruch 10 oder 11, dadurch gekennzeichnet, daß eine Vakuumkammer (7) mit einem heizbaren Träger (4) für das Sorbens (1) vorgesehen ist und daß an die Vakuumkammer (7) ein Massenspektrometer (13) angeschlossen ist.

13. Einrichtung nach Anspruch 12, dadurch gekennzeichnet, daß der Träger (4) mit einer regelbaren Heizung ausgerüstet ist.

14. Einrichtung nach Anspruch 11 und Anspruch 13, dadurch gekennzeichnet, daß der Träger (4) ein Sinterhohlkörper ist, auf den die Folie (1) aufwickelbar ist.

FIG.1

FIG.2

FIG.3

FIG.4

88.024

FIG.5

G

K

1

d

FIG.6

M

t

FIG.7

7

13

4

1

12

11

14

9

5

8

6

FIG.8

15

1

16

88.024

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| A | US-A-4 541 268 (B. ODERNHEIMER)<br>* Spalte 1, Zeilen 1-63; Spalte 2, Zeilen 58-66; Spalte 3, Zeilen 58-59; Spalte 5, Zeile 9 - Spalte 6, Zeile 17; Figuren 1-3 *<br>--- | 1,3,5 | G 01 N 1/22<br>G 01 N 30/00 |
| A | FR-A-2 496 263 (COMPAGNIE GENERALE DES MATIERES NUCLEAIRES ET COMMISSARIAT A L'ENERGIE ATOMIQUE)<br>* Seite 1, Zeilen 3-6; Seite 2, Zeile 36 - Seite 3, Zeile 26; Seite 4, Zeilen 15-29; Figur 2; Seite 6, Zeilen 10-30; Seite 9, Zeile 23 - Seite 10, Zeile 20 *<br>--- | 1,2,10 | |
| A | GB-A-2 008 423 (BRITISH PETROLEUM CO. LTD)<br>* Ansprüche 1,4 *<br>--- | 5,6 | |
| A | N.T.I.S. TECHNICAL NOTES, Nr. 9, September 1985, 'Request 100202', Teil J., Springfield, Virginia, US; "Novel methane gas sensor invented"<br>* Insgesamt *<br>----- | 7,8 | RECHERCHIERTE SACHGEBIETE (Int. Cl.3)<br><br>G 01 N |

Der vorliegende Recherchenbericht wurde für alle Patentansprüche erstellt

| Recherchenort | Abschlußdatum der Recherche | Prüfer |
|---|---|---|
| DEN HAAG | 30-05-1989 | HOCQUET A.P.E. |

EPO FORM 1503 03.82 (P0403)